# EUROPEAN PATENT APPLICATION

(11) **EP 4 459 824 A1**
(43) Date of publication of application: **06.11.2024**
(21) Application number: 23171846.1
(22) Date of filing: 05.05.2023
(51) Int. Cl.: H02J 3/38, G01R 31/34, H02J 13/00, F03D 13/30

(54) **PERFORMANCE TESTING OF A POWER PLANT DEVICE**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

A method of testing a power plant device (2) in a power plant (1), the power plant (1) comprising the power plant device (2) and one or more wind turbines (3) configured to electrically connect to the power plant device (2), the power plant (1) suitable for connecting to an electrical grid (G) external to the power plant (1), the method comprising: a) generating a voltage by the one or more wind turbines (3) in a condition where the power plant (1) is disconnected from the electrical grid (G); b) controlling the generated voltage by the one or more wind turbines (3) to emulate one or more grid conditions at the power plant device (2); and c) measuring the performance of the power plant device (2) under the one or more emulated grid conditions in a condition where the one or more wind turbines (3) are electrically connected to the power plant device (2) and the power plant (1) is disconnected from the electrical grid (G).

## Description

### FIELD

The present disclosure relates to a method of testing a power plant, and more specifically a wind power plant comprising a power plant device and one or more wind turbines. The disclosure also relates to a system comprising a power plant device and one or more wind turbines and a power plant comprising a power plant device and one or more wind turbines.

### BACKGROUND

As the proportion of energy generated by wind power and the size of wind power plants increases in power systems such as regional or national electrical grids, the requirement for verification of the electrical characteristics of wind power plants are becoming more demanding and thorough.

Known verification tests require a decoupling between the frequency of the grid to which the wind power plant is interfaced with, and the frequency of the power system (for example to test the response of the power plant to abnormal voltages and frequencies, phase jumps, rate of change of frequency tests and so on). This means that existing tests are overly reliant on the inherent (often complex) properties of the electrical grid.

Some verification tests require to test the compatibility of the wind power plant with harmonic emissions. In known tests, the harmonic compatibility is only tested to the extent of the harmonics which are already present in the grid. This means that other harmonic emissions, which for example may appear as the grid evolves over time, are not sufficiently tested. Again this means that the tests are overly reliant on the properties of the electrical grid.

Newer standards for the wind power plants demand that grid compliance of the wind power plants are periodically tested over the lifetime of the wind turbines and power plants. Current techniques are not able to easily be performed several times over the lifetime of the power plants and are normally only performed at the beginning of the power plant, for example before the power plant is connected to the grid. One reason for this is that existing tests require the use of dedicated equipment to be installed at the power plant and connected manually to the wind turbines in order to test the performance of the wind turbines. This requires the use of costly equipment and has a time-consuming installation process. Further, the equipment must be re-installed to the turbines when an updated test needs to be performed.

It is also observed that faults occurring on a component of a wind power plant are difficult to investigate without the use of such dedicated equipment, increasing the complexity of fault diagnoses.

There therefore exists the need for methods and apparatuses for testing components of a wind power plant that uses fewer dedicated testing devices, and which has a less time-consuming setup.

There further exists the need for methods and apparatuses for testing that are less reliant on the properties of the electrical grid to which the power plant is connected.

There also exists the need for methods and apparatuses that can easily retest the power plant as needed over the lifetime of the power plant.

Finally, there exists the need for methods and apparatuses which can efficiently diagnose a fault in a wind power plant.

### SUMMARY

According to a first aspect of the invention, there is provided a method of testing a power plant device in a power plant, the power plant comprising a power plant device and one or more wind turbines configured to electrically connect to the power plant device, the power plant suitable for connecting to an electrical grid external to the power plant, the method comprising:
a) generating a voltage by the one or more wind turbines in a condition where the power plant is disconnected from the electrical grid;
b) controlling the generated voltage by the one or more wind turbines to emulate one or more grid conditions at the power plant device; and
c) measuring the performance of the power plant device under the one or more emulated grid conditions in a condition where the one or more wind turbines are electrically connected to the power plant device and the power plant is disconnected from the electrical grid.

According to another aspect of the invention, there is provided a wind turbine configured to electrically connect to a power plant device, wherein the wind turbine is configured to:
a) generate a voltage; and
b) control the generated voltage to emulate one or more grid conditions at the power plant device when the wind turbine and power plant device are connected.

According to a further aspect of the invention, there is provided a power plant comprising one or more wind turbines and a power plant device configured to electrically connect to the one or more wind turbines, the power plant suitable for connecting to an electrical grid external to the power plant, wherein the power plant is configured to perform the following steps:
a) generate a voltage by the one or more wind turbines in a condition where the power plant is disconnected from the electrical grid;
b) control the generated voltage by the one or more wind turbines to emulate one or more grid conditions for the power plant device; and
c) measure the performance of the power plant device under the one or more emulated grid conditions in a condition where the one or more wind turbines are electrically connected to the power plant device and the power plant is disconnected from the electrical grid.

### BRIEF DESCRIPTION OF THE DRAWINGS

To enable better understanding of the present disclosure, and to show how the same may be carried into effect, reference will now be made, by way of example only, to the accompanying schematic drawings, in which:
- Fig. 1: shows a schematic electrical diagram of a power plant according to one or more embodiments, according to an example.
- Fig. 2: shows a schematic diagram of a wind turbine for testing a power plant device according to one or more embodiments, according to an example.
- Fig. 3A: shows a schematic diagram of a first power flow configuration according to one or more embodiments, according to an example.
- Fig. 3B: shows a schematic diagram of a second power flow configuration according to one or more embodiments, according to an example.
- Fig. 3C: shows a schematic diagram of a third power flow configuration according to one or more embodiments, according to an example.
- Fig. 4: shows a schematic electrical diagram of a power plant according to one or more embodiments, according to an example.
- Fig. 5: shows a method of testing a power plant device according to one or more embodiments, according to an example.
- Fig. 6A: shows another method of testing a power plant device according to one or more embodiments, according to an example.
- Fig. 6B: shows another method of testing a power plant device according to one or more embodiments, according to an example.

### DETAILED DESCRIPTION

As used herein, the term "power plant device" may be understood to mean any device of a power plant. The power plant device may be any power consuming device of the power plant such as a control apparatus or other apparatus for operating the power plant, or may be an energy generation unit. In methods where the performance of the power plant device is measured under one or more grid conditions, the power plant device may be considered a "Device Under Test" or "DUT". A DUT may be any device whose performance is measured under one or more grid conditions.

As used herein, the term "energy generation unit" may be understood to mean any apparatus configured to provide electrical energy for an electrical grid. Examples of energy generation units include photovoltaic devices, wind turbines and energy storage devices such as batteries or battery banks.

As used herein, the term "power plant" may be understood to mean any facility configured to generate electricity for an electrical grid. The term "wind power plant" may be understood to mean any power plant comprising one or more wind turbines.

As used herein, the term "electrical grid" may be understood to mean any interconnected electrical network for delivering electrical energy from a power plant to one or more energy consumers. The electrical grid may be local, region, national or continental.

As used herein, the term "grid condition" may be understood to mean a state of an electrical grid defined by a set of voltage characteristics of the grid. The set of voltage characteristics completely define the voltage on the grid in the grid condition (i.e. such that the voltage of the grid condition can be reconstructed from the set of voltage characteristics). This may include a complete description of the voltage components of the grid condition and the voltage amplitude and frequency of each component of the grid condition. The grid condition may be a steady-state condition such that it is defined by a set of state voltage characteristics. The grid condition may be a dynamic condition such that it is defined by a set of time-dependent voltage characteristics.

As used herein, the term "voltage characteristic" may be understood to mean any parameter describing aspect of a voltage. Characteristics include waveform type (e.g. sinusoidal or square wave), voltage profile in the frequency domain, voltage amplitude and frequency.

As used herein, the term "frequency profile" or "voltage profile in the frequency domain" may be understood to mean the Fourier Transform of a voltage waveform in the time domain.

As used herein, the term "power converter" may be understood to mean any power converter for converting electrical power from one form to another. Examples include AC-AC converters, DC-AC converters, and AC-DC converters.

As used herein, the term "operation mode" for a device may be considered to mean a condition under which the device operates. Different operation modes may be associated with different conditions. For a given operation mode, the device and its constituent components may have a set of device outputs and behaviour in response to device inputs. Different operation modes may have one or more different device outputs or behaviours in response to device inputs. An example of an operation mode for an energy generation unit is an energy generating mode in which the energy generation unit is configured to generate electrical energy for an electrical grid.

As used herein, the term "Under Voltage Ride Through" or "Low Voltage Ride Through" refers to the capability of an energy generating unit to respond correctly to a period of lower electrical network voltage on the electrical grid (i.e. lower than the nominal voltage of the grid) to which the energy generating unit is attached. For example, depending on the application of the energy generating unit it may be required disconnect from the power plant when the low voltage is detected, or remain connected and operational, or change its operation mode.

As used herein, the term "Over Voltage Ride Through" or "High Voltage Ride Through" may be understood to mean the capability of an energy generating unit to respond correctly to a period of higher electrical network voltage on the electrical grid (i.e. higher than the nominal voltage of the grid) to which the energy generating unit is attached. For example, depending on the application of the energy generating unit it may be required disconnect from the power plant when the high voltage is detected, or remain connected and operational, or change its operation mode.

As used herein, the term "Fast Fault Current" may be understood to mean the reaction of a power plant device (e.g. power generating unit) to a fault in the network or grid (for example a voltage dip) in relation to the current feed-in onto the grid. The reaction may be a corresponding reactive current or active current that is supplied to or taken from the grid by the power plant device. In methods that measure the performance of a power plant device in a Fast Fault Current event, the voltage at the power plant device may be controlled to emulate a grid condition (such as a sudden voltage drop) at the power plant device that would trigger a Fast Fault Current at the power plant device. The performance of the power plant device may be measured by, for example, measuring the current output by the power plant device onto the grid in response to the grid condition, to determine whether the Fast Fault Current is produced as expected.

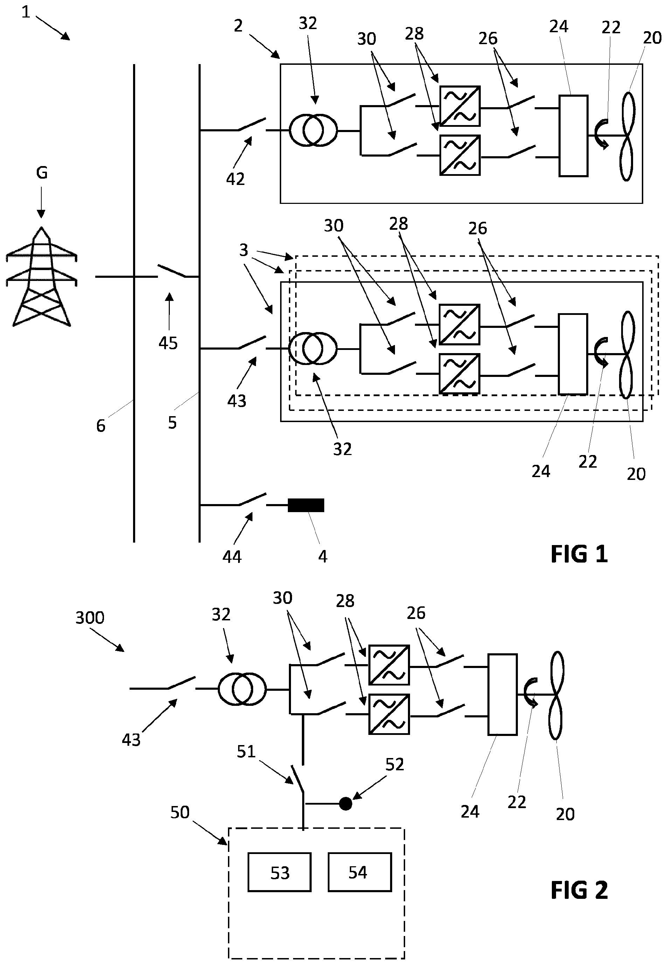

Fig. 1 shows a schematic electrical diagram of a power plant 1 according to one or more embodiments. It is noted that the electrical diagram of Fig. 1 is exemplary and that alternative electrical circuits for the power plant may be provided which are configured to perform the methods of the present disclosure. It will be appreciated that other electrical components of the power plant 1 are omitted for brevity, but any number of additional components may be provided in the electrical circuit for the power plant 1 as known in the art, such as auxiliary power components, kill switches, circuit-breakers, and the like.

The power plant 1 comprises a power plant device 2 and one or more wind turbines 3. The power plant 1 may also optionally comprise a tertiary device 4 which may be an electrical dissipator connected to ground (for example a resistor). In some embodiments, the tertiary device 4 may be any tertiary device which is able to receive net power flow from the power plant device 2 and/or the one or more wind turbines 3, such as a capacitor bank, battery bank, or energy storage device. In some embodiments the tertiary device 4 may be any power consuming device such as a motor (or even a wind turbine operating as a motor). In some embodiments the tertiary device 4 may be a wind turbine 300 described with reference to Fig. 2. The power plant device 2, one or more wind turbines 3 and electrical dissipator 4 are configured to electrically connect to one another so that electrical power is allowed to flow between the power plant device 2, one or more wind turbines 3 and electrical dissipator 4.

In some embodiments such as that illustrated in Fig. 1, the power plant device 2 is a further wind turbine (which may also be referred to as a wind turbine under test). In some embodiments the power plant device 2 may be a wind turbine 300 as described with reference to Fig. 2. However, in other embodiments the power plant device 2 may be any other electrical device of the power plant 1, such as any power consuming device of the power plant 1, or another energy generation unit of the power plant 1, such as one or more of a photovoltaic device and an energy storage device (for example a battery).

It is noted that whilst in Fig. 1, a specific configuration of components is illustrated for the wind turbine under test and the one or more wind turbines 3, it will be appreciated that any type of wind turbine may be used for the one or more wind turbines 3 and the power plant device 2. The one or more wind turbines 3 may include one or more wind turbines 300 as described with reference to Fig. 2.

In some embodiments such as that shown in Fig. 1, the power plant device 2 is a wind turbine under test and is identical (i.e. consists of all of the same features) to the one or more wind turbines 3. However, in other embodiments, the wind turbine under test may be different (i.e. comprise one or more different features or omit one or more features) to the one or more wind turbines 3.

The power plant device 2, one or more wind turbines 3 and tertiary device 4 (when provide) may be configured to connect to one another by any suitable configuration, for example by direct electrical connections between each of the devices. In other embodiments such as that illustrated in Fig. 1, the power plant device 2, one or more wind turbines 3 and tertiary device 4 (when provided) may each be configured to connect indirectly via a power plant busbar 5. Respective switches 42, 43, 44 may be operable to selectively connect and disconnect the power plant device 2, one or more wind turbines 3 and tertiary device 4 from the busbar 5. The one or more wind turbines 3 may be electrically connected to one another in any suitable configuration, for example in parallel, and may connect to the busbar 5 by a single switch 43 or by individual switches such that each of the one or more wind turbines 3 may be individually connected and disconnected from the busbar 5.

The switches 42, 43, 44 may be any suitable switches for connecting the devices 2, 3, 4 to the busbar 5 and more specifically may be any suitable switchgear.

As shown in Fig. 1, each of the one or more wind turbines 3 and the power plant device 2 may comprise one or more wind turbine blades 20 connected to a rotor 22. The rotor 22 is configured to rotate relative to a stator 24 which generates a voltage in the windings of the stator 24. In the illustrated embodiment, the stator 24 comprises two windings whereas in other embodiments any number of windings may be provided. Each winding may comprise a generator-side switch (or switchgear) 26, a power converter 28, a grid-side switch (or switchgear) 30 and a transformer 32 connected in series in that order. It will be appreciated that in other embodiments the illustrated components 26, 28, 30 and 32 may be provided in a different order. It will also be appreciated that the electrical configuration of the turbines shown in Fig. 1 is exemplary only and that any wind turbine may be used without departing from the scope of the present disclosure. Each wind turbine of the one or more wind turbines 3 (and the power plant device 2) may comprise an auxiliary system (not shown) which may provide auxiliary power and control the wind turbine. For example, the auxiliary system may comprise an auxiliary power supply for supplying power to one or more components of the wind turbine in order to control the said components (for example in order to configure the wind turbine before it generates electrical power by rotation of the turbine blades). The auxiliary system may also comprise a controller configured to control one or more components of the wind turbine (for example to change the attack angle of the wind turbine blades 20, to open and close the switches 26 and 30 and to control operation of the power converter 26 and/or the transformer 32. The controller may be connected to any suitable user interface so that a user may operate the controller to control the components of the wind turbine).

As previously described, the power plant device 2, one or more wind turbines 3, and the tertiary device 4 may be selectively connected to busbar 5 by switches 42, 43 and 44 (in some embodiments, via further switches not shown for each of the turbines 3 when a plurality are provided). The power plant 1 may comprise a controller (not shown) configured to cause the switches connecting the busbar 5 and the power plant device 2, one or more turbines 3 and tertiary device 4 to open and close selectively. The controller may be any suitable controller as known in the art and may be operable by an operator of the power plant 1. The switches 42, 43, 44 may alternatively or additionally be operated by respective controllers of the power plant device 2, the one or more wind turbines 3 and the tertiary device 4.

The power plant 1 may also comprise a grid busbar 6 electrically connected to one or more electrical grids G. The grid busbar 6 may be connected to busbar 5 by one or more switches (or switchgears) 45. The power plant 1 may comprise a controller (not shown) configured to cause the switch or switches 45 connecting the busbar 5 and the busbar 6 to open and close selectively. The controller may be the same or different to the controller used to operate the switches 43, 43, 44 and may be operable by an operator of the power plant 1. The power plant 1 may be connected to grid G by any suitable alternative means to the busbar 6. The grid may be any electricity grid, for example a local, regional, or national grid. The busbar 6 may lead to multiple grids.

The power plant 1 may be controlled as follows to perform a method of testing the power plant device 2.

Firstly, the one or more wind turbines 3 may be operated to generate a voltage (for example by allowing the turbine blades 20 of the one or more wind turbines 3 to rotate in order to generate a voltage in the windings of the stator 24). This may be performed in a condition where the power plant 1 is disconnected from the electrical grid G. In the configuration shown in Fig. 1, this step may be performed when switch 45 is open and switches 43 and 30 and 26 of the one or more wind turbines 3 are closed. If power flow is required, one or both of switches 42 and 44 may be closed during this step.

In a second step, the generated voltage by the one or more wind turbines 3 may be controlled to emulate one or more grid conditions for the power plant device 2. In particular, the voltage generated by the one or more wind turbines 3 may be controlled such that at the power plant device 2, a voltage having a pre-determined set of characteristics is provided. For example, the one or more wind turbines 3 may generate a voltage having a set of characteristics (e.g. magnitude, frequency, or frequency profile, etc.) on busbar 5 which corresponds to the characteristics of the grid G (or another grid, or a planned grid different to grid G) in certain conditions. The output voltage may be controlled by controlling power converters 28 (for example in a Variable Voltage Variable

Frequency mode) such that the characteristics of the voltage on busbar 5 are controlled to obtain the grid conditions. In other embodiments there may be provided a separate power converter between the busbar 5 and the power plant device 2 such that the separate power converter controls the voltage at the power plant device 2 to emulate the grid condition at the power plant device 2.

In a third step, the performance of the power plant device 2 is measured under the one or more emulated grid conditions. If the power plant device 2 is not already connected to the one or more wind turbines 3 (e.g. via busbar 5), then the power plant device 2 is connected (for example by closing switch 42) and the performance of the power plant device 2 is measured.

The performance of the power plant device 2 may be measured in any suitable manner. For example, the measurement may be a qualitative measurement. In some embodiments, the one or more grid conditions may include a grid condition which should trigger a specific response from the power plant device 2, for example changing to a different operation mode, triggering an alert, switching off the device 2 or any other response. Such responses may be measured by monitoring the relevant component of the device 2. For example, a controller of device 2 may be monitored in order to detect whether a control signal is output by the controller as expected when the emulated grid condition is provided to the power plant device. The measurement may be a quantitative measurement. For example, the voltage or current of the power plant device 2 at a given point in the electrical circuit may be measured during the emulated grid conditions to determine whether the voltage or current is as expected during the emulated grid condition. It will be appreciated that any number of performance metrics, both quantitative and qualitative, may be measured during the emulated grid conditions to determine any aspect of the performance of the power plant device 2 during the emulated grid conditions. Any other operating parameters of the power plant device 2 may also be measured. Where the power plant device 2 is a wind turbine, operating parameters such as the rotation per minute of the wind turbine may be measured to determine a performance parameter of the wind turbine. Further, where the power plant device 2 is a wind turbine comprising an auxiliary system such as those described with reference to Fig. 2, the performance of the auxiliary system or any of the components of the auxiliary system may be measured, such as motors, pumps or lights comprised in the auxiliary system.

It is noted that the power plant 1 may be an in-service power plant, that is to say, the power plant 1 may be connected to and producing power for the grid G. In such cases, prior to beginning the method of testing power plant device 2, the power plant 1 is disconnected from the G, for example by opening switch 45 in the embodiment illustrated in Fig. 1.

It is noted that in the embodiment illustrated in Fig. 1 that the test method is configured to be performed by connecting the power plant device 2, one or more wind turbines 3 and tertiary device 4 via busbar 5, which is configured to connect to the grid busbar 6. In other embodiments, the power plant 1 may comprise a separate set of electrical connections between the power plant device 2, one or more wind turbines 3 and tertiary device 4, for example via a third busbar, which is independent of busbars 5 and 6. Accordingly, in such embodiments the testing method may be performed in a condition where: the busbars 5 and 6 remain connected; the power plant device 2, one or more wind turbines 3 and tertiary device 4 are disconnected from the busbar 5; and the power plant device 2, one or more wind turbines 3 and tertiary device 4 are electrically connected by the separate set of electrical connections such as the third busbar.

In other embodiments, the test may be performed before the power plant is connected to the grid for the first time. Accordingly, the step of opening switch 45 may not necessarily occur.

In some embodiments, the electrical power may be dissipated completely by the power plant device 2 during the test (for example if the power plant device 2 is a power consuming device), or by the combination of the power plant device 2 and the one or more turbines 3 (for example due to energy consumption by the one or more turbines 3 in operating the one or more turbines). In such embodiments, electrical power may not be provided to the tertiary device 4 (for example the switch 44 may be left open during the test) or the tertiary device 4 may not be provided in the power plant 1.

In some embodiments where there is excess electrical energy provided to the power plant device 2, the excess electrical energy may be directed to the tertiary device 4 during the steps of controlling the voltage to emulate one or more grid conditions and measuring the performance of the power plant device 2. Alternatively or additionally, the excess electrical energy may be partially or fully dissipated by operating one of the one or more wind turbines 3 (in the case that there are two or more of the turbines 3) as a motor and driving the wind turbine blades (indeed in some embodiments the tertiary device 4 may be a driven wind turbine of the power plant 1).

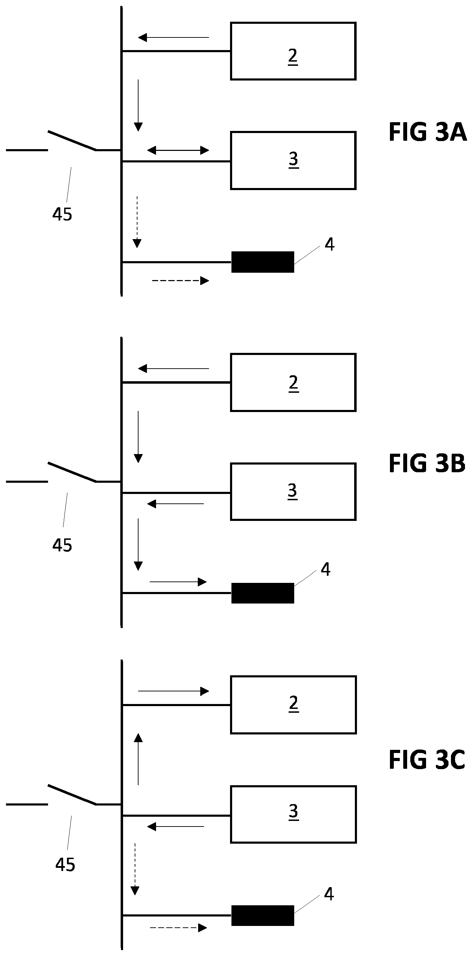

Figs. 3A to 3C show schematic diagrams of various power flow configurations of the power plant 1 (the arrows show the directions of travel of electrical power along the electrical lines).

Fig. 3A shows a schematic diagram of a power flow configuration in which the excess electrical energy of the power plant 1 is partially or fully dissipated by one or more of the turbines 3 (in the case that the energy is partially dissipated by one or more of the turbines, the tertiary device 4 may also partially dissipate excess energy as indicated by the dashed arrows).

Fig. 3B shows a schematic diagram of a power flow configuration in which the excess electrical energy of the power plant 1 is fully dissipated by the tertiary device 4.

Fig. 3C shows a schematic diagram of a power flow configuration in which the excess electrical energy of the power plant 1 is dissipated partially or fully by the power plant device 2 (in the case that the energy is partially dissipated by the power plant device 2, the tertiary device 4 may also partially dissipate excess energy as indicated by the dashed arrows) .

For a given power plant 1, multiple flow configurations may be configured to be used. For example, the power plant device 2 may be an energy generation unit which must be tested in a first configuration in which the unit does not generate energy, and a second configuration in which the unit does generate energy, therefore giving rise to different amounts of electrical energy supplied in the power plant 1 and therefore giving rise to different possibilities for power flow configurations. One or more controllers of the power plant 1 may control operations of the power plant device 2, one or more turbines 3, tertiary device 4, and their respective switches, in order to use the appropriate power flow configuration for a given test. The power flow configuration for a given test may be predetermined and saved in a memory of the controller.

Fig. 2 shows a wind turbine 300 for testing a power plant device according to one or more embodiments. The wind turbine 300 may comprise any of the features of the one or more wind turbines 3 described with reference to Fig. 1. Whilst in Fig. 2 the stator 24 is shown as having two windings, any number of windings may be provided. The wind turbine 300 additionally comprises an auxiliary system 50. The auxiliary system 50 comprises a Turbine Energy Support System (TESS) 53 (comprising a power supply, for example a battery) for supplying power to any of the components of the wind turbine 300, for example in order to initialise the various components. Alternatively or additionally to the TESS 53, the wind turbine 300 may comprise a power connection 52 configured to connect to an external power supply (for example a generator). The auxiliary system 50 may also comprise a controller 54 communicatively connected to the various components of the wind turbine 300, and in particular the power converters 28. The controller is configured to control the operation of the components of the wind turbine 300 by emitting control signals to the components. The wind turbine 300 may further comprise a switch or breaker 51 configured to selectively connect and disconnect the auxiliary system 50 from the other components of the wind turbine 300. The switch or breaker 51 may be operable by the controller 54.

The auxiliary system 50 may also comprise or be configured to connect to a user interface for receiving instructions from a user. The user instructions may be received by the controller 54 and in turn control operation of the wind turbine 300 and its components, in particular the operation mode of the power converters 28. The user interface may be connected to the auxiliary system 50 by any means, including wired and wireless communications as known in the art.

The controller 54 may include one or more processing unit units, such as one or more microprocessors, GPUs, CPUs, multi-core processors, distributed processing apparatus or similar.

The auxiliary system 50 may also comprise a memory comprising instructions, which when executed by the controller causes the controller to control the operation of the wind turbine 300 according to any of the methods disclosed herein. The memory may be any suitable storage medium, including without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

In the wind turbine 300, the power converters 28 are controllable such that the voltage output on the grid side of the power converters 28 can be varied. The voltage may be controlled such that the voltage magnitude and frequency can be selected and varied. The voltage may be varied such that the waveform or frequency profile of the voltage signal may be selected and varied. The power converters 28 may be configured to operated under a Variable Voltage Variable Frequency (VUVF) mode as known in the art. As such, the power converters 28 may be able to generate a variable voltage signal to perform any of the tests for the power plant device 2 as disclosed herein. Advantageously, the power converters 28 of wind turbine 300 are the same power converters 28 which are used to convert the power generated on the stator side of the turbine 300 for the electrical grid G. In other words, the power converters 28 may be operable under a first mode in which the power generated by the wind turbine 300 is converted to the correct voltage having the required characteristics (frequency, voltage magnitude etc.) which is compatible for the electrical grid G. The power converters 28 may be switched from the first mode to a second mode in which the power generated by the wind turbine 300 is converted into a voltage having the required characteristics for emulating one or more grid conditions, wherein one or more voltage characteristics for the one or more emulated grid conditions are different to the required voltage characteristics for the electrical grid G. The power converters 28 may be controlled by the controller 54 which emits control signals to the power converters 28 to switch the mode of the power converters 28 and to control the voltage outputted on the grid side of the power converters 28.

As such, the wind turbine 300, whilst principally configured to generate an output voltage which is compatible with the electrical grid G (i.e. has the correct properties such that the voltage can be safely and correctly delivered to the grid G), the wind turbine 300 is also operable to deliver voltages which are incompatible with the grid G (i.e. whilst the power plant 1 is disconnected from the grid G) in order to provide voltages to the power plant device 2 which deviate from the voltage of the grid G in order to provide comprehensive testing to the power plant device 2.

It is generally noted that power consumed by the wind turbine 300 in changing between operations modes, or any other power consumption by the wind turbine 300 prior to testing of the power plant device 2, may be supplied by TESS 53, and external power source connected at power connection 52, or from power taken from the electrical grid G (if still connected).

In some embodiments, the wind turbine 300 may be one or more of the wind turbines 3, the tertiary device 4 and/or the power plant device 2 in the power plant 1 described with reference to Fig. 1.

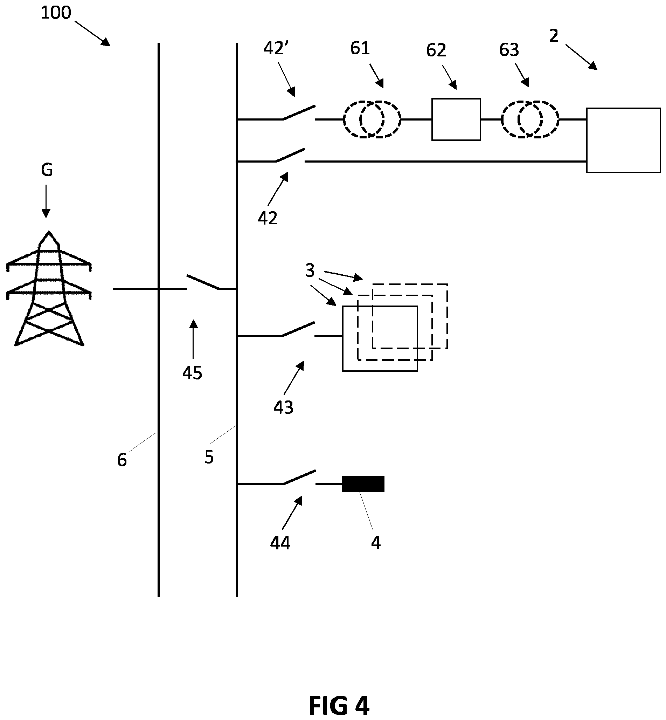

As an alternative to the wind turbine 300 described with reference to Fig. 2, in some embodiments the one or more turbines 3 may not be controllable to vary the voltage characteristics in order to emulate one or mor grid conditions at the power plant device. For example, the power converters of the one or more wind turbines 3 may not be controllable and the one or more wind turbines 3 may be configured to only output a voltage to the bus 5 which is compatible with the electrical grid G. Fig. 4 shows an electrical diagram of such an alternative power plant 100 according to one or more embodiments. As in the case of power plant 1 described with reference to Fig. 1, it is noted that the electrical diagram shown in Fig. 4 is exemplary only and that alternative electrical circuits for the power plant 100 may be provided which are configured to perform the methods of the present disclosure. It will be appreciated that other electrical components of the power plant 100 are omitted for brevity, but any number of additional components may be provided in the electrical circuit for the power plant 100 as known in the art, such as auxiliary power components, kill switches, circuit-breakers and the like.

The power plant 100 comprises a power plant device 2 and one or more wind turbines 3, and optionally a tertiary device 4. The power plant device 2, one or more wind turbines 3 and tertiary device 4 may be any of the examples described with reference to Fig. 1, except the one or more wind turbines 3 of power plant 100 are not configured to be controlled to provide the voltage for the one or more grid conditions. The power plant 100 additionally comprises a power converter 62 connected between the power plant device 2 and the one or more wind turbines 3. The power converter 62 may be connected at any point between the power plant device 2 and the one or more wind turbines 3, and may be connected via the busbar 5 as shown in Fig. 4. The power converter 62 is controllable such that the voltage output at the power plant device 2 can be varied. The voltage may be controlled such that the voltage magnitude and frequency can be selected and varied. The voltage may be varied such that the waveform or frequency profile of the voltage signal may be selected and varied. The power converters 62 may be configured to operate under a Variable Voltage Variable Frequency (VUVF) mode as known in the art. As such, the power converter 62 may be able to generate a variable voltage signal to perform any of the tests for the power plant device 2 as disclosed herein.

A transformer 61 may be provided between the busbar 5 and power converter 62 if needed to ensure compatibility between the power converter 62 and the voltage on the busbar. A transformer 63 may be provided between the power converter 62 if needed to ensure compatibility between the power converter 62 and the power plant device 2.

A switch 42' (e.g. switchgear) may be provided between the busbar 5 and the power converter 62 to selectively connect and disconnect the power converter 62 to the busbar 5. In some embodiments, an additional electrical connection may be provided between the busbar 5 and the power plant device 2 that bypasses the power converter 62, for example where the power converter 62 is only configured to be used when testing the power plant device 2. The additional electrical connection may include a switch (e.g. switchgear) 42 to selectively connect and disconnect the power plant device 2 from the busbar 5. The power converter 62 may be connected to both the busbar 5 and the power plant device 2 via releasable connectors such that the power converter 62 can be removed from the power plant device 2 when the testing is completed.

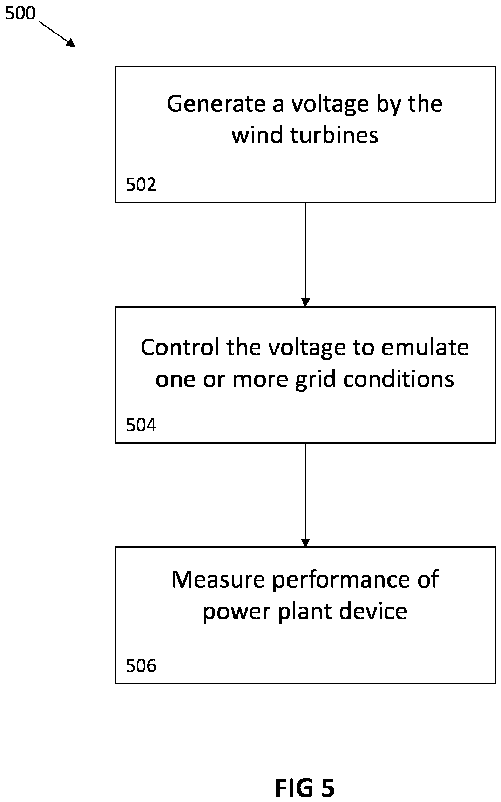

Fig. 5 shows a method 500 for testing a power plant (which may optionally be, for example, power plant 1 or power plant 100) .

The method 500 comprises, in a first step 502, generating a voltage by the one or more wind turbines (for example one or more wind turbines 3 or 300) in a condition where the power plant is disconnected from the electrical grid. The power plant may already be disconnected from the grid or the method 500 may comprise the prior step of disconnecting the power plant from the grid (for example by opening switchgear 45).

In a second step 504, the method 500 comprises controlling the generated voltage by the one or more wind turbines to emulate one or more grid conditions at the power plant device. The grid conditions may be any combination of the grid conditions disclosed herein. If the one or more wind turbines comprise controllable power converters then the generated voltage may be controlled by controlling the power converters of the one or more wind turbines (for example wind turbine 300 described with reference to Fig. 2). In other embodiments the voltage at the power plant device may be controlled by a separate power converter (for example the power plant 100 described with reference to Fig. 4). If needed, excess electrical energy generated by the one or more wind turbines may be directed to tertiary device (e.g. tertiary device 4). Alternatively or additionally the electrical power generated in the power plant during the method 500 may be partially or fully dissipated by operating one or more turbines of the power plant as a motor.

In a third step 506, the performance of the power plant device is measured under the one or more emulated grid conditions in a condition where the one or more wind turbines are electrically connected to the power plant device and the power plant is disconnected from the electrical grid. The method 500 may include the prior step of electrically connecting the power plant device and the one or more wind turbines by closing the relevant switches (e.g. switches 42 and 43) if the power plant device and one or more wind turbines are not already connected. The performance may be measured qualitatively or quantitatively as described with reference to power plant 1 and Fig. 1.

Optionally, prior to step 502, the one or more turbines may be switched from a first operation mode to a second operation mode in which the output voltages of one or more turbines are controllable. The first operation mode may be a power generation mode for generating power for the electrical grid (i.e. in the first operation mode the voltage generated by the turbines is compatible with the electrical grid). The second mode may be a mode in which the wind turbines generate a voltage having the required characteristics for the one or more emulated grid conditions, wherein one or more voltage characteristics for the one or more emulated grid conditions are different to the required voltage characteristics for the electrical grid. As such, in some embodiments the one or more wind turbines are configured to generate an output voltage which is compatible with the electrical grid (i.e. has the correct properties such that the voltage can be safely and correctly delivered to the grid G) and may also be operable to deliver voltages which are incompatible with the grid (i.e. whilst the power plant is disconnected from the grid) in order to provide voltages to the power plant device which deviate from the voltage of the grid in order to provide comprehensive testing to the power plant device.

In the method 500, the power consumed by the one or more turbines in switching from the first operation mode to the second operation mode may be provided by any of the electrical grid (if not disconnected), one or more auxiliary power supplies of the one or more turbines or an external power source connected to the power plant.

In the method 500, the performance of the power plant device in step 306 could be measured during the normal operation of the power plant device. for example, in embodiments where the power plant device is an energy generation unit, the performance may be measured whilst the energy generation unit is generating power suitable for the electrical grid.

In some embodiment steps 502 to 506 are performed in turn for each wind turbine of the power plant, that is to say, each wind turbine is in turn selected to be the power plant device and the voltage of the other wind turbines is generated and controlled to emulate the one or more grid conditions at the selected wind turbine. This is repeated for each wind turbine so that the performance of each wind turbine is measured in turn.

It is noted that the emulated grid conditions disclosed herein in relation to the power plants described with reference to Figs. 1 to 4 and the methods described with reference to Fig. 5 may be any grid condition which emulates the voltage characteristics (e.g. voltage magnitude, frequency, frequency profile, waveforms and so on) of an electrical grid for a predetermined event. Such events may include: grid conditions corresponding to abnormal magnitudes, frequencies, and harmonics (i.e. that deviate from the nominal magnitudes, frequencies and harmonics of the gird); grid conditions corresponding to the expected condition of the grid (i.e. magnitudes, frequencies, harmonics that correspond to the normal condition of the grid); conditions corresponding to an Under Voltage Ride Through test; conditions corresponding to an Over Voltage Ride Through test; conditions corresponding to a Fast Fault Current event; conditions corresponding to a specific harmonic profile or sequence of harmonic profiles; conditions corresponding to a specific voltage magnitude or sequence of voltage magnitudes; conditions corresponding to a specific voltage frequency or sequence of frequencies; conditions corresponding to a phase jump event; conditions corresponding to a rate of change of frequency; conditions corresponding to the gird conditions of a simulated grid; and any other grid condition for which the power plant device may need to demonstrate a predetermined standard of grid compliance.

In the methods and systems described herein, the step of emulating one or more grid conditions may comprise one or more of the following:
- varying the frequency of the voltage generated by the one or more wind turbines to generate a voltage sequence at the power plant device having a plurality of frequencies. This could be used to test the range of frequencies under which the power plant device operates normally (i.e. the range of frequencies under which the qualitative or quantitative performance metrics meet a predetermined acceptable value or range of values, or a correct safety procedure is followed by the power plant device) ;
- varying the magnitude of the voltage generated by the one or more wind turbined to generate a voltage sequence at the power plant device having a plurality of voltage magnitudes. This could be used to test the range of voltages under which the power plant device operates normally (i.e. the range of frequencies under which the qualitative or quantitative performance metrics meet a predetermined acceptable value or range of values, or a correct safety procedure is followed by the power plant device). This may also be used to measure the reactive power produced by the power plant device under such conditions;
- varying the phase angle of the voltage generated by the one or more wind turbines to generate a voltage sequence at the power plant device having one or more voltage phase jumps. This could be used to test the performance of the power plant device when the grid experiences phase jumps (i.e. to determine whether the qualitative or quantitative performance metrics meet a predetermined acceptable value or range of values; or a correct safety procedure is followed by the power plant device, or a correct safety procedure is followed by the power plant device);
- varying the frequency of the voltage generated by the one or more wind turbines to generate a voltage sequence at the power plant device having one or more rates of changes of frequency. This could be used to determine the performance of the power plant device given a rate of change of frequency of the grid (i.e. to determine whether the qualitative or quantitative performance metrics meet a predetermined acceptable value or range of values; or a correct safety procedure is followed by the power plant device, or a correct safety procedure is followed by the power plant device);
- generating by the one or more wind turbines a voltage comprising a fundamental voltage and one or more harmonic voltages. This could be generated by a particular waveform that has peaks at a fundamental frequency and its harmonics in the frequency domain, or alternatively a first turbine of the one or more turbines may generate the fundamental frequency and further turbines of the one or more turbines may generate the harmonic frequencies. This may be used to determine the compatibility of the power plant device for a given harmonic profile of the grid (i.e. to determine whether the qualitative or quantitative performance metrics meet a predetermined acceptable value or range of values; or a correct safety procedure is followed by the power plant device, or a correct safety procedure is followed by the power plant device). This may also be used to determine whether the power plant device emits harmonic frequencies to the grid (i.e. be measuring the output voltage of the power plant device onto the grid).
- Generating by the one or more wind turbines one or more voltage profiles corresponding to an Under Voltage Ride Through test and/or an Over Voltage Ride Through test. This may be used to determine whether the correct fault response is followed by the power plant device under such conditions (i.e. by measuring the qualitative and/or quantitative performance parameters to determine that the correct procedure by the components of the power plant device is followed).

In some embodiments of the systems and methods disclosed herein, the first step of generating a voltage may comprise generating a voltage by the one or more wind turbines corresponding to the expected voltage of the electrical grid, in a condition where the power plant device is electrically disconnected from the one or more wind turbines, and subsequently electrically connecting the power plant device to the one or more wind turbines. In such embodiments the power plant device is started under normal grid conditions before initiating the emulated grid conditions for the power plant device. This may allow the power plant device to connect to the power plant under normal conditions so that it is able to achieve a normal operation mode before the emulated grid conditions are provided. This allows the power plant device to be tested in its normal operation mode.

The above tests may be performed according to preset profiles saved in a memory configured to cause one or more controllers of the power plant and/or wind turbines to control the voltage at the power plant device according to the preset profile. The preset profiles may be implemented in a computer program saved in the memory and may be implemented in hardware or software or a combination thereof. Alternatively or additionally, a user may input instructions to the one or more controllers via a user interface to perform one or more tests according to a preset profile (for example the user may select a sequence of voltage magnitudes, frequencies, phase jumps, rate of change of frequencies and harmonic profiles for the one or more wind turbines to generate).

In the any of the methods and systems disclosed herein, the voltage of the power plant may be stabilised as an intermediate step between the generation of a voltage for the power plant device by the one or more turbines and the measurement of the performance of the power plant device. In particular, the measurement may take place after an amount of time has passed such that a steady state voltage is achieved at the power plant device. Where a tertiary device is used to receive excess electrical energy, the tertiary device may be controlled in order to stabilise the voltage during the intermediate step (for example the tertiary device may be controllable to receive a variable amount of excess electrical energy).

In any of the methods and systems disclosed herein, once the power plant device has been tested under all of the emulated grid conditions, the one or more turbines may be stopped and changes to a mode for generating electricity for the grid. The power plant may then be reconnected to the electrical grid and the wind turbines may be started in order to resume generating electricity for the electrical grid.

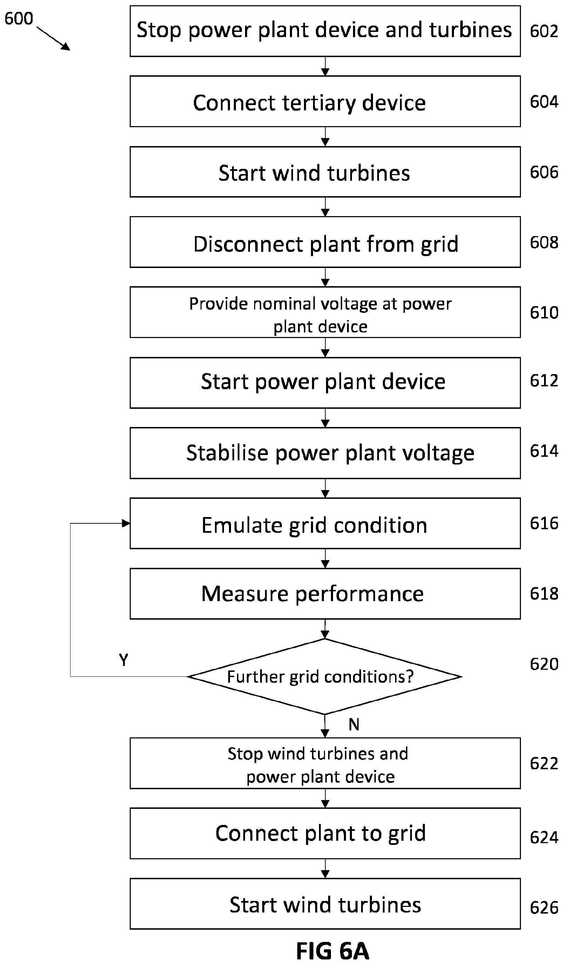

Fig. 6A shows a method 600 for testing a power plant device according to one or more embodiments, which in some embodiments may be the power plant 1 or 100 described previously or any other suitable power plant. The power plant comprises a power plant device, one or more wind turbines and may comprise a tertiary device. In the method 600, the power plant begins in a condition where it is connected to the electrical grid.

In step 602, if operating (for example generating power for the electrical grid), the power plant device and one or more turbines are stopped and may be disconnected from the power plant (for example by opening the respective switches connecting the power plant device and one or more turbines to the power plant).

In step 604, if excess electrical energy must be dissipated in subsequent steps, a tertiary device is connected to the power plant (for example by closing a switch connecting the tertiary device to the power plant).

In step 606, the one or more wind turbines are connected to the power plant and initialised using power supplied from the electrical grid. The one or more turbines are set to operate in a controllable mode (for example VVVF) using the power supplied from the electrical grid.

In step 608, once the one or more wind turbines are correctly configured, the power plant is disconnected from the electrical grid, for example by opening a switch or switchgear connecting the power plant to the electrical grid.

In step 610, a nominal voltage is provided by the one or more wind turbines at the power plant device, wherein the nominal voltage corresponds to the predetermined normal operating conditions of the power plant device. The nominal voltage is stabilised by waiting for transient conditions in the power plant to decay (i.e. for a steady state to be achieved). The tertiary device may further be controlled in order to stabilise the nominal voltage.

In step 612, once the nominal voltage is stabilised, the power plant device is started. This may include connecting the power plant device to the power plant if it was previously disconnected. If the power plant device is an energy generation unit, this step may include providing power to the power plant by the power plant device.

In step 614, the power plant voltage is again stabilised by waiting for transient conditions in the power plant voltage to decay (i.e. for a steady state voltage to be achieved). The tertiary device may be controlled in order to stabilise the voltage accordingly.

At step 616, once the power plant voltage is stabilised, the one or more wind turbines are controlled to emulate a grid condition. The performance of the power plant device is measured under the grid condition (step 618).

If there are further grid conditions under which the power plant device should be tested (step 620), the one or more wind turbines are controlled to emulate the further grid conditions in turn, and the performance of the power plant device is measured under each of the further gird conditions (i.e. steps 616 and 618 are repeated for each grid condition) .

Once the performance of the power plant device has been measured for all grid conditions, the wind turbines and the power plant device are stopped (step 622).

Subsequently in step 624, the power plant is reconnected to the electrical grid (for example by closing the switch or switchgear connecting the power plant to the electrical grid).

Subsequently in step 626, the one or more wind turbines and the power plant device are started so that the power plant resumes generating electricity for the electrical grid.

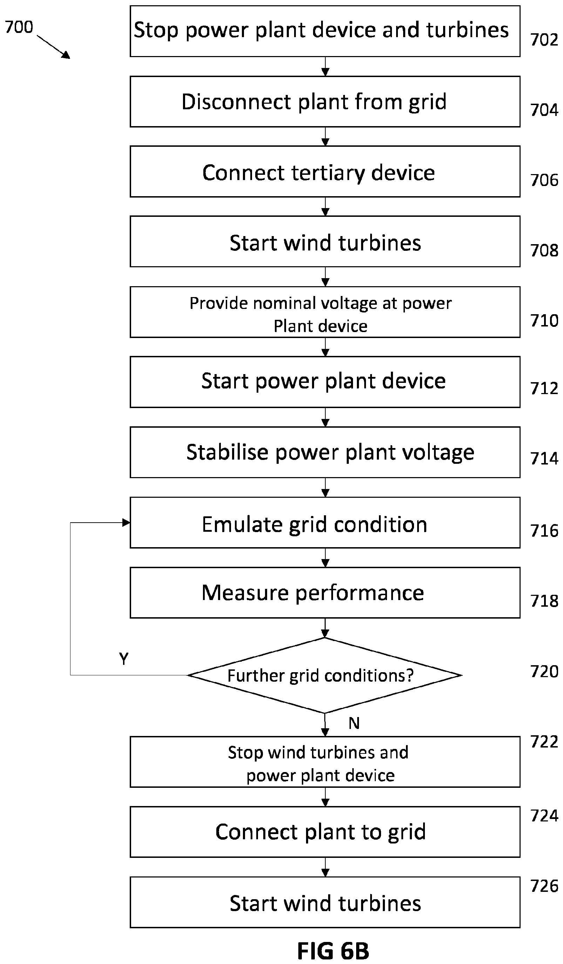

Fig. 6B shows a method 700 for testing a power plant device according to one or more embodiments, which in some embodiments may be the power plant 1 or 100 described previously or any other suitable power plant. The power plant comprises a power plant device, one or more wind turbines and may comprise a tertiary device.

In step 702, if operating (for example generating power for the electrical grid), the power plant device and one or more turbines are stopped and may be disconnected from the power plant (for example by opening the respective switches connecting the power plant device and one or more turbines to the power plant).

In step 704, if the power plant is connected to the electrical grid, the power plant is disconnected from the electrical grid, for example by opening a switch or switchgear connecting the power plant to the electrical grid.

In step 706, if excess electrical energy must be dissipated in subsequent steps, a tertiary device is connected to the power plant (for example by closing a switch connecting the tertiary device to the power plant).

In step 708, the one or more wind turbines are connected to the power plant and initialised using power supplied from a power supply of one or more auxiliary systems of the one or more wind turbines, or from an external power supply connected to the one or more wind turbines, or from power generated from rotation of the wind turbine blades of the one or more wind turbines. The one or more turbines are set to operate in a controllable mode (for example VVVF) using the power supply of one or more auxiliary systems of the one or more wind turbines, or from an external power supply connected to the one or more wind turbines, or from power generated from rotation of the wind turbine blades of the one or more wind turbines.

In step 710, a nominal voltage is provided by the one or more wind turbines at the power plant device, wherein the nominal voltage corresponds to the predetermined normal operating conditions of the power plant device. The nominal voltage is stabilised by waiting for transient conditions in the power plant to decay (i.e. for a steady state to be achieved). The tertiary device may further be controlled in order to stabilise the nominal voltage.

In step 712, once the nominal voltage is stabilised, the power plant device is started. This may include connecting the power plant device to the power plant if it was previously disconnected. If the power plant device is an energy generation unit, this step may include providing power to the power plant by the power plant device.

In step 714, the power plant voltage is again stabilised by waiting for transient conditions in the power plant voltage to decay (i.e. for a steady state voltage to be achieved). The tertiary device may be controlled in order to stabilise the voltage accordingly.

At step 716, once the power plant voltage is stabilised, the one or more wind turbines are controlled to emulate a grid condition. The performance of the power plant device is measured under the grid condition (step 718).

If there are further grid conditions under which the power plant device should be tested (step 720), the one or more wind turbines are controlled to emulate the further grid conditions in turn, and the performance of the power plant device is measured under each of the further gird conditions (i.e. steps 716 and 718 are repeated for each grid condition) .

Once the performance of the power plant device has been measured for all grid conditions, the wind turbines and the power plant device are stopped (step 722).

Subsequently in step 724, the power plant is reconnected to the electrical grid (for example by closing the switch or switchgear connecting the power plant to the electrical grid).

Subsequently in step 726, the one or more wind turbines and the power plant device are started so that the power plant resumes generating electricity for the electrical grid.

It is noted generally that the components of the power plant (the switchgears, the power plant device and its constituent components, the one or more wind turbines and their constituent components, the tertiary device and its constituent components) may be controlled by separate controllers or there may be provided one or more controllers that provide control signals to more than one component of the power plant. In some embodiments a single controller may control the entire power plant, without departing from the scope of the present invention.

It is noted that any of the wind turbines and power plants disclosed herein (and in particular those described with reference to Figs. 1 to 4) may be configured to perform any of the method steps described herein.

It is further noted that in any of the embodiments disclosed here, if a plurality of turbines are used to generate the one or more grid conditions, the voltages of the plurality of turbines may be synchronised by one or more controllers such that the grid conditions are achieved at the power plant device.

All of the above are fully within the scope of the present disclosure, and are considered to form the basis for alternative embodiments in which one or more combinations of the above-described features are applied, without limitation to the specific combination disclosed above.

In light of this, there will be many alternatives which implement the teaching of the present disclosure. It is expected that one skilled in the art will be able to modify and adapt the above disclosure to suit its own circumstances and requirements within the scope of the present disclosure, while retaining some or all technical effects of the same, either disclosed or derivable from the above, in light of their common general knowledge in this art. All such equivalents, modifications or adaptations fall within the scope of the present disclosure.

## Claims

1. A method of testing a power plant device in a power plant, the power plant comprising the power plant device and one or more wind turbines configured to electrically connect to the power plant device, the power plant suitable for connecting to an electrical grid external to the power plant, the method comprising:
a) generating a voltage by the one or more wind turbines in a condition where the power plant is disconnected from the electrical grid;
b) controlling the generated voltage by the one or more wind turbines to emulate one or more grid conditions at the power plant device; and
c) measuring the performance of the power plant device under the one or more emulated grid conditions in a condition where the one or more wind turbines are electrically connected to the power plant device and the power plant is disconnected from the electrical grid.

2. The method of claim 1, wherein prior to step a), the power plant is connected to the electrical grid external to the power plant and the method comprises, prior to step a), the step of disconnecting the power plant from the electrical grid.

3. The method of claim 1 or 2, wherein the method further comprises directing excess electrical energy to a tertiary device during step b), optionally wherein the tertiary device is an electrical dissipator.

4. The method according to any preceding claim, wherein electrical power generated in the power plant during any of steps a) to c) is partially or fully dissipated by operating one or more of the turbines as a motor.

5. The method according to any preceding claim, wherein for one or more of the wind turbines, the corresponding generated voltage for each grid condition is controlled via a controllable power converter of the said wind turbine.

6. The method according to claim 5, wherein the one or more wind turbines are configured to operate under a Variable Voltage Variable Frequency mode.

7. The method according to any preceding claim, wherein prior to step a) the one or more turbines are switched from a first operation mode to a second operation mode in which the output voltages of one or more turbines are controllable.

8. The method according to claim 7, wherein the first operation mode is a power generation mode for generating power for the electrical grid.

9. The method according to claim 7 or 8, wherein power consumed by the one or more turbines in switching from the first operation mode to the second operation mode is provided by:
- the electrical grid; or
- one or more auxiliary power supplies of the one or more turbines; or
- an external power source connected to the power plant.

10. The method of any preceding claim, wherein step b) comprises one or more of the following:
- varying the frequency of the voltage generated by the one or more wind turbines to generate a voltage sequence at the power plant device having a plurality of frequencies;
- varying the magnitude of the voltage generated by the one or more wind turbined to generate a voltage sequence at the power plant device having a plurality of voltage magnitudes;
- varying the phase angle of the voltage generated by the one or more wind turbines to generate a voltage sequence at the power plant device having one or more voltage phase jumps;
- varying the frequency of the voltage generated by the one or more wind turbines to generate a voltage sequence at the power plant device having one or more rates of changes of frequency;
- generating by the one or more wind turbines a voltage comprising a fundamental voltage and one or more harmonic voltages;
- generating by the one or more wind turbines one or more voltage profiles corresponding to an Under Voltage Ride Through event and/or an Over Voltage Ride Through event.

11. The method of any preceding claim, wherein the power plant device is:
- a power consuming device of the power plant; or
- an energy generation unit, preferably wherein the energy generation unit comprises one or more of a photovoltaic device, an energy storage device and a further wind turbine.

12. The method of any preceding claim, wherein step a) comprises:
- generating a voltage by the one or more wind turbines corresponding to the expected voltage of the electrical grid, in a condition where the power plant device is electrically disconnected from the one or more wind turbines; and
- subsequently electrically connecting the power plant device to the one or more wind turbines.

13. A wind turbine configured to electrically connect to a power plant device, wherein the wind turbine is configured to:
a) generate a voltage; and
b) control the generated voltage to emulate one or more grid conditions at the power plant device when the wind turbine and power plant device are connected.

14. The wind turbine of claim 13, wherein the wind turbine is further configured to generate a voltage suitable for an electrical grid and the generated voltage for the one or more grid conditions is incompatible for the electrical grid.

15. A power plant comprising one or more wind turbines and a power plant device configured to electrically connect to the one or more wind turbines, the power plant suitable for connecting to an electrical grid external to the power plant, wherein the power plant is configured to perform the following steps:
a) generate a voltage by the one or more wind turbines in a condition where the power plant is disconnected from the electrical grid;
b) control the generated voltage by the one or more wind turbines to emulate one or more grid conditions for the power plant device; and
c) measure the performance of the power plant device under the one or more emulated grid conditions in a condition where the one or more wind turbines are electrically connected to the power plant device and the power plant is disconnected from the electrical grid.
